# EUROPÄISCHE PATENTSCHRIFT

(11) **EP 1 046 679 B1**
(45) Veröffentlichungstag und Bekanntmachung des Hinweises auf die Patenterteilung: **02.07.2003**
(21) Anmeldenummer: 00107862.5
(22) Anmeldetag: 12.04.2000
(51) Int. Cl.: C09B 67/22, D06P 1/38

(54) **Reaktivfarbstoffmischungen für salzarme Färbeflotte**
Reactive dye mixtures for dyeing bath with low salt content
Mélanges de colorants réactifs pour bain de teinture à faible teneur en sel

(30) Priorität: 22.04.1999 DE 19918160
(43) Veröffentlichungstag der Anmeldung: 25.10.2000
(73) Patentinhaber: DyStar Textilfarben GmbH & Co. Deutschland KG, 65926 Frankfurt am Main (DE)
(72) Erfinder: Pedemonte, Ronald, Dr., 65817 Eppstein-Vockenhausen (DE); Reiher, Uwe, Dr., 65719 Hofheim (DE); Schumacher, Christian, Dr., 65779 Kelkheim (DE); Kunz, Martin, 65817 Eppstein (DE); Eichhorn, Joachim, Dr., 65929 Frankfurt am Main (DE)

(56) Entgegenhaltungen:
- WO-A-93/12181
- WO-A-98/42785
- DE-C- 4 142 766

## Beschreibung

Die vorliegende Erfindung liegt auf dem technischen Gebiet der faserreaktiven Farbstoffe.

Reaktivfarbstoffe, die zum Färben von Cellulosefasern eingesetzt werden könnnen, sind zahlreich bekannt und in der Literatur beschrieben. Diese herkömmlichen Farbstoffe genügen allerdings in aller Regel nicht in ausreichendem Maße den heutigen hohen Anforderungen in Bezug auf ihre Anwendbarkeit in speziellen Färbeverfahren, in Bezug auf die Färbbarkeit der Fasern und in Bezug auf die Echtheitseigenschaften der gefärbten Produkte. Von Nachteil ist insbesondere, daß die bekannten Farbstoffe fast ausnahmslos mit verhältnismäßig hohen Elektrolytsalzmengen, im allgemeinen 50 bis 100 g Elektrolytsalz pro Liter Färbebad, gefärbt werden müssen.

In den Patentanmeldungen WO 98/42784, WO 98/42785, WO 93/18224 und US 5,330,539 sind zwar Farbstoffe beschrieben, die sich mit deutlich niedrigeren Salzmengen färben lassen. Bei einem kompletten Verzicht auf Elektrolytsalze werden jedoch oft nur farbschwache Färbungen erhalten.

Es besteht somit Bedarf nach Reaktivfarbstoffen, die mit möglichst wenig oder sogar ohne Salzzusatz gefärbt werden können und die unter diesen Bedingungen farbstarke Färbungen liefern.

Es wurde nun überraschend gefunden, daß Mischungen aus Farbstoffen der nachstehenden allgemeinen Formeln (1), (2) und (3) die geforderten Anforderungen erfüllen. Die Farbstoffe (1) und (2) sind als solche bereits bekannt und in der Literatur beschrieben. So sind Farbstoffe der allgemeinen Formel (1) der DE-A 1 644 171 und Farbstoffe der allgemeinen Formel (2) der WO98/42785 zu entnehmen.

Die vorliegende Erfindung betrifft Mischungen von Reaktivfarbstoffen, die mindestens zwei Farbstoffe aus der Reihe der allgemeinen Formeln (1), (2) und (3) 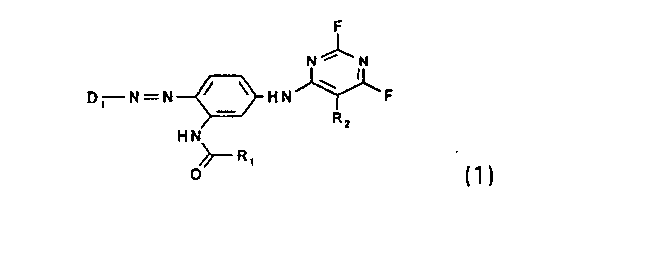 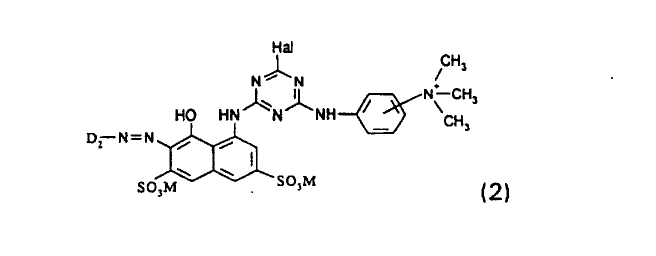 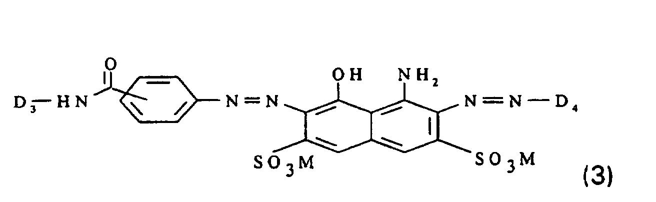 enthalten, worin
- D₁: für einen Benzol- oder Naphthalinring steht, der ein oder mehrere Sulfonsäuregruppen enthält;
- R₁: Methyl oder Amino bedeutet;
- R₂: Wasserstoff oder Chlor bedeutet;
- Hal: Fluor oder Chlor bedeutet;
- M: für Wasserstoff oder ein Alkalimetall steht;
- D₂ bis D₄: die Bedeutung einer Gruppe der allgemeinen Formel (D) 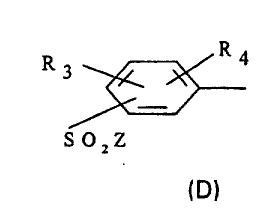 haben, in welcher
- R₃ und R₄: unabhängig voneinander Wasserstoff, Methyl, Ethyl, Methoxy, Ethoxy, Sulfo oder Carboxy bedeuten und
- Z: für -CH=CH₂ oder -CH₂CH₂Z₁, worin Z₁ eine unter Alkaliwirkung abspaltbare Gruppe bedeutet, steht.

Erfindungsgemäße Farbstoffmischungen, die zwei Farbstoffe enthalten, können jeweils einen oder mehrere, beispielsweise zwei oder drei, der Farbstoffe der allgemeinen Formeln (1) und (2), (1) und (3) oder (2) und (3) enthalten. Der oder die Farbstoffe der genannten allgemeinen Formeln sind dabei jeweils, bezogen auf die Gesamtfarbstoffmenge, bevorzugt in Mengen von 10 bis 90 Gew%, besonders bevorzugt 30 bis 70 Gew.%, enthalten.

Bevorzugte erfindungsgemäße Farbstoffmischungen enthalten jedoch jeweils einen oder mehrere, wie beispielsweise zwei oder drei, Farbstoffen der allgemeinen Formeln (1), (2) und (3). Solche Mischungen enthalten insbesondere Farbstoffe der allgemeinen Formel (1) in Mengen von 5 bis 90 Gew.%, Farbstoffe der allgemeinen Formel (2) in Mengen von 5 bis 80 Gew.% und Farbstoffe der allgemeinen Formel (3) in Mengen von 5 bis 90 Gew.%, jeweils bezogen auf die Gesamtfarbstoffmenge.

Besonders bevorzugte erfindungsgemäße Farbstoffmischungen aus Farbstoffen der allgemeinen Formeln (1), (2) und (3), sind solche, die Farbstoffe der allgemeinen Formel (1) in Mengen von 5 bis 50 Gew.%, Farbstoffe der allgemeinen Formel (2) in Mengen von 5 bis 50 Gew.% und Farbstoffe der allgemeinen Formel (3) in Mengen von 45 bis 90 Gew.%, sowie solche, die Farbstoffe der allgemeinen Formel (1) in Mengen von 30 bis 80 Gew.%, Farbstoffe der allgemeinen Formel (2) in Mengen von 5 bis 50 Gew.% und Farbstoffe der allgemeinen Formel (3) in Mengen von 10 bis 50 Gew.%, jeweils bezogen auf die Gesamtfarbstoffmenge, enthalten.

Ein für D₁ stehender Benzol- oder Naphthalinring enthält bevorzugt 1, 2 oder 3 Sulfonsäuregruppen, besonders bevorzugt 2 Sulfonsäuregruppen.
Ein für M stehendes Alkalimetall kann insbesondere Natrium, Kalium oder Lithium sein.
In der Gruppe der Formel (D) stehen R₃ und R₄ bevorzugt für Wasserstoff.
Eine für Z₁ stehende, unter Alkaliwirkung unter Bildung der Vinylgruppe abspaltbare Gruppe, ist insbesondere Chlor, Brom, Thiosulfato, Sulfato, Phosphato, Methylsulfonyloxy, Methylsulfonylamido, Benzoyloxy, Toluylsulfonyloxy oder (C₂-C₅)-Alkanoyloxy, wie beispielsweise Acetyloxy. Bevorzugt bedeutet Z₁ Sulfato. Z bedeutet bevorzugt Vinyl und β-Sulfatoethyl.

Die Farbstoffe der allgemeinen Formeln (2) und (3) können, insbesondere bei gleichem Chromophor, innerhalb der Bedeutung von Z unterschiedliche faserreaktive Gruppen -SO₂-Z besitzen. Insbesondere können die Farbstoffmischungen Farbstoffe gleichen Chromophors entsprechend den hier angesprochenen allgemeinen Formeln enthalten, in denen die faserreaktiven Gruppen -SO₂-Z zum einen Vinylsulfonylgruppen und zum anderen Gruppen -CH₂CH₂Z₁, bevorzugt β-Sulfatoethylsulfonyl-Gruppen, sind. Enthalten die Farbstoffgemische die jeweiligen Farbstoffkomponenten teilweise als Farbstoff mit der Vinylsulfonylgruppe, so liegt der Farbstoffanteil des jeweiligen Farbstoffes mit der Vinylsulfonylgruppe bis zu etwa 30 Mol-%, bezogen auf den jeweiligen Farbstoffchromophor, vor.

Die erfindungsgemäßen Farbstoffmischungen lassen sich nach an und für sich bekannten und dem Fachmann bekannten Methoden herstellen, wie beispielsweise durch mechanisches Vermischen der Einzelfarbstoffe in den gewünschten Gewichtsanteilen, sei es in Form von deren Farbstoffpulvern oder - granulaten oder von wäßrigen Lösungen der Einzelfarbstoffe, zum Beispiel auch der Lösungen, die bei der Synthese der Farbstoffe anfallen. Die erfindungsgemäßen Farbstoffmischungen können als Präparation in fester oder in flüssiger (gelöster) Form vorliegen. In fester Form enthalten sie soweit erforderlich die bei wasserlöslichen und insbesondere faserreaktiven Farbstoffen üblichen Elektrolytsalze, wie Natriumchlorid, Kaliumchlorid und Natriumsulfat.

Überraschend zeichnen sich die erfindungsgemäßen Farbstoffmischungen dadurch aus, daß sie in niedrigen Farbtiefen ohne jeden Salzzusatz, in mittleren Farbtiefen mit sehr geringem Salzzusatz, wie 1 bis 5 g/l Färbebad Elektrolytsalz, und in höheren Farbtiefen mit geringem Salzzusatz, wie 5 bis 10 g/l Färbebad Elektrolytsalz, gefärbt werden können, wobei in allen Fällen farbstarke Färbungen erhalten werden. Die oben genannten Präparationen enthalten dementsprechend in der Regel gar keine oder weniger Elektrolytsalze als Präparationen von bekannten faserreaktiven Farbstoffen. Dies bedeutet, daß mit Hilfe der erfindungsgemäßen Farbstoffmischungen die Belastung der Färbereiabwässer und damit auch die Kosten für die Reduzierung dieser Belastung erheblich reduziert werden. Unter niedrigen Farbtiefen werden in diesem Zusammenhang solche verstanden, bei denen nicht mehr als 2 Gew. % Farbstoff, bezogen auf das Substrat, eingesetzt werden. Mittlere Farbtiefen sind solche, bei denen 2 bis 4 Gew. % und höhere Farbtiefen solche, bei denen 4 bis 10 Gew.% Farbstoff, jeweils bezogen auf das Substrat, eingesetzt werden.

Feste Präparationen der erfindungsgemäßen Farbstoffmischungen können desweiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumborat, Natriumhydrogencarbonat, Natriumdihydrogenphosphat, Natriumtricitrat und Dinatriumhydrogenphosphat, geringe Mengen an Sikkativen oder, falls sie in flüssiger, wäßriger Lösung (einschließlich des Gehaltes von Verdickungsmitteln, wie sie bei Druckpasten üblich sind) vorliegen, Substanzen, die die Haltbarkeit dieser Präparationen gewährleisten, wie beispielsweise schimmelverhütende Mittel.

Im allgemeinen liegen die erfindungsgemäßen Farbstoffmischungen als Farbstoffpulver mit einem Gehalt von 30 bis 90 Gew.-%, bezogen auf das Farbstoffpulver bzw. die Präparation, an Farbstoff vor. Diese Farbstoffpulver können zudem die erwähnten Puffersubstanzen in einer Gesamtmenge von bis zu 5 Gew.-%, bezogen auf das Farbstoffpulver enthalten. Sofern die erfindungsgemäßen Farbstoffmischungen in wäßriger Lösung vorliegen, so beträgt der Gesamtfarbstoffgehalt in diesen wäßrigen Lösungen bis zu etwa 50 Gew.-%, wie beispielsweise zwischen 5 und 50 Gew.-%. Die wäßrigen Lösungen (Flüssigpräparationen) können die erwähnten Puffersubstanzen in der Regel in einer Menge von bis zu 10 Gew.-%, bevorzugt bis zu 2 Gew.-%, enthalten.

Die Abscheidung der auf chemischem Wege hergestellten erfindungsgemäßen Farbstoffmischungen aus deren Syntheselösung kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen oder Sprühtrocknung der Reaktionslösung, wobei dieser Reaktionslösung eine Puffersubstanz zugefügt werden kann.

Die erfindungsgemäßen Farbstoffmischungen können jedoch auch erst unmittelbar vor dem Färbeprozeß im Färbebehälter aus den Einzelfarbstoffen angesetzt werden, d.h. die Einzelfarbstoffe werden im Färbebad als Trichromie appliziert.

Die Farbstoffe der allgemeinen Formeln (1) und (2) können insbesondere nach den in oben zitierten Literaturstellen angegebenen Verfahren hergestellt werden. Die Farbstoffe der allgemeinen Formel (3) lassen sich beispielsweise dadurch herstellen, daß man ein Amin der allgemeinen Formel D₄-NH₂, worin D₄ wie oben angegeben definiert ist, in üblicher Weise diazotiert, beispielsweise mittels bei -5 bis + 15°C in stark saurem wäßrigen Medium unterhalb eines pH-Wertes von 1,5, und die erhaltene Diazoniumverbindung anschließend in wässrigem Medium mit 1-Amino-8-hydroxy-3,6-disulfosäure (H-Säure) bei einem pH-Wert von 0 bis 2 und einer Temperatur von 0 bis 10°C zum Monazofarbstoff der allgemeinen Formel (5) 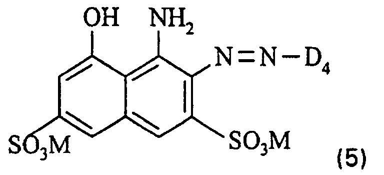 umsetzt, wobei D₄ und M die oben genannten Bedeutungen besitzen und im Anschluß daran ein Amin der allgemeinen Formel (6) 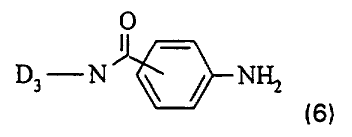 worin D₃ wie oben angegeben definiert ist, in der üblichen Weise diazotiert und dann mit dem Monoazofarbstoff der allgemeinen Formel (5) bei einem pH-Wert von 4 bis 7,5, bevorzugt bei 5 bis 6, und einer Temperatur von 5 bis 20°C, bevorzugt zwischen 10 und 15°C, zum Disazofarbstoff der allgemeinen Formel (3) gekuppelt wird.

Die erfindungsgemäßen Farbstoffmischungen werden zum Färben oder Bedrucken von hydroxy- und/oder carbonamidgruppenhaltigen Materialien, beispielsweise in Form von Flächengebilden, wie Papier und Leder oder von Folien, wie beispielsweise aus Polyamid, oder in der Masse, wie beispielsweise von Polyamid und Polyurethan, insbesondere aber von diesen Materialien in Faserform verwendet. Auch können die bei der Synthese der Azoverbindungen anfallenden Lösungen nach deren Vermischen zu den erfindungsgemäßen Farbstoffmischungen, gegebenenfalls nach oder unter Zusatz einer Puffersubstanz, gegebenenfalls auch nach Konzentrieren oder Verdünnen, direkt als Flüssigpräparation der färberischen Verwendung zugeführt werden.

Materialien bzw. Verfahren zum Färben oder Bedrucken solcher Materialien in an und für sich üblichen Verfahrensweisen, bei welchen man eine erfindungsgemäße Farbstoffmischung als Farbmittel einsetzt. Bevorzugt kommen die Materialien in Form von Fasermaterialien zur Anwendung, insbesondere in Form von Textilfasern, wie Geweben oder Garnen, wie in Form von Strängen oder Wickelkörpern.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Farbstoffmischungen lassen sich auf den genannten Substraten, insbesondere auf den genannten Fasermaterialien, nach den für wasserlösliche, insbesondere nach den für faserreaktive Farbstoffe bekannten Anwendungstechniken applizieren und fixieren.

So erhält man mit ihnen auf Cellulosefasern nach den Ausziehverfahren aus langer Flotte unter Verwendung von verschiedensten säurebindenden Mitteln Färbungen mit sehr guten, gegenüber den Einzelfarbstoffen verbesserten Farbausbeuten. Man färbt bevorzugt in wäßrigem Bad bei Temperaturen zwischen 40 und 105°C, gegebenenfalls bei einer Temperatur bis zu 120°C unter Druck, und gegebenenfalls in Gegenwart von üblichen Färbereihilfsmitteln. Man kann dabei so vorgehen, daß man das Material in das warme Bad einbringt und dieses allmählich auf die gewünschte Färbetemperatur erwärmt und den Färbeprozeß bei dieser Temperatur zu Ende führt.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls nach den üblichen Druckverfahren für Cellulosefasern, die einphasig, beispielsweise durch Bedrucken mit einer Natriumbicarbonat oder ein anderes säurebindendes Mittel enthaltenden Druckpaste und anschließendes Dämpfen bei 100 bis 103°C, oder zweiphasig, beispielsweise durch Bedrucken mit neutraler oder schwach saurer Druckfarbe und anschließendem Fixieren entweder durch Hindurchführen durch ein heißes alkalisches Bad oder durch Überklotzen mit einer alkalischen Klotzflotte und anschließendem Verweilen oder Dämpfen oder Behandlung mit Trockenhitze des alkalisch überklotzten Materials, durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe der erfindungsgemäßen Farbstoffmischungen auf den Cellulosefasern bewirkenden Mittel sind beispielsweise wasserlösliche basische Salze der Alkali- und der Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat. Durch die Behandlung der erfindungsgemäßen Mischungen mit den säurebindenden Mitteln, gegebenenfalls unter Wärmeeinwirkung, werden diese chemisch an die Cellulosefaser gebunden.

Die erfindungsgemäßen Farbstoffmischungen zeichnen sich auf den Cellulosefasermaterialien bei Anwendung in den Färbe- und Druckverfahren durch eine höhe Fixierausbeute aus. Insbesondere die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die mit den erfindungsgemäßen Farbstoffmischungen erhältlichen Färbungen und Drucke besitzen klare Nuancen. Insbesondere weisen die Färbungen und Drucke auf Cellulosefasermaterialien eine hohe Farbstärke, eine gute Lichtechtheit und sehr gute Naßechtheiten, wie Wasch-, Walk-, Wasser-, Seewasser-, Überfärbeund saure sowie alkalische Schweißechtheiten, desweiteren eine gute Plissierechtheit, Bügelechtheit und Reibechtheit auf.

Besonders hervorzuheben sind die mit den erfindungsgemäßen Farbstoffmischungen auf Cellulosefasermaterialien erzielbaren hohen Fixierausbeuten, die über 90% betragen können. Ein weiterer Vorteil der obengenannten Mischungen besteht in der leichten Auswaschbarkeit der beim Färbevorgang nicht fixierten Anteile, wodurch der Waschvorgang der gefärbten Cellulosefasermaterialien mit geringen Waschflottenmengen und gegebenenfalls einer energiesparenden Temperaturführung während des Waschvorganges bewerkstelligt werden kann.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter. Die in den Beispielen formelmäßig beschriebenen Verbindungen sind in Form der freien Säuren angegeben. Im allgemeinen werden sie in Form ihrer Salze, vorzugsweise Lithium-, Natrium- oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen als solche oder in Form ihrer Salze, vorzugsweise Alkalimetallsalze, wie Natrium- oder Kaliumsalze, in die Synthese eingesetzt werden.

### Beispiel 1:

Eine Mischung aus 0,66 Teilen des Farbstoffes der Formel (1a) 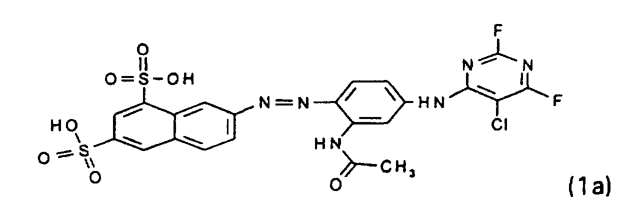 0,66 Teilen des Farbstoffes der Formel (2a) 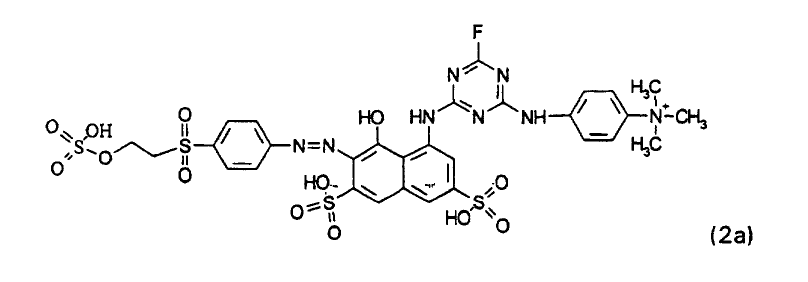 0,66 Teilen des Farbstoffes der Formel (3a) 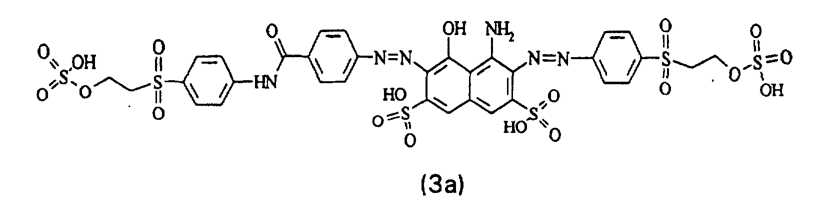 8 Teilen Natriumcarbonat und 1 Teil eines Benetzungsmittels wird in 1000 Teilen Wasser gelöst. In dieses Färbebad gibt man 100 g eines Baumwollgewebes. Die Temperatur des Färbebades wird in 60 Minuten auf 60°C erhöht und diese Temperatur 30 Minuten gehalten. Danach wird die gefärbte Ware zunächst 2 Minuten mit Trinkwasser gespült und anschließend 5 Minuten mit E-Wasser gespült. Man trägt die gefärbte Ware jetzt bei 40°C in 1000 Teile einer wäßrigen Lösung, die 1 Teil einer 60%igen Essigsäure enthält, ein. Mit E-Wasser wird bei 70°C nachgespült und während einer Viertelstunde mit einem Waschmittel kochend geseift, nochmals gespült und getrocknet. Man erhält eine farbstarke braune Färbung mit sehr guten Echtheitseigenschaften.

### Beispiel 2

Eine Mischung aus 1,33 Teilen des Farbstoffes der Formel (1a), 1,33 Teilen des Farbstoffes der Formel (2a), 1,33 Teilen des Farbstoffes der Formel (3a), 5 Teilen Natriumchlorid, 10 Teilen Natriumcarbonat und 1 Teil eines Benetzungsmittels wird in 1000 Teilen Wasser gelöst. In dieses Färbebad gibt man 100 g eines Baumwollgewebes. Die weitere Bearbeitung erfolgt wie in Beispiel 1 angegeben. Man erhält eine farbstarke braune Färbung mit sehr guten Echtheitseigenschaften.

### Beispiel 3

Eine Mischung aus 2,66 Teilen des Farbstoffes der Formel (1a), 2,66 Teilen des Farbstoffes der Formel (2a), 2,66 Teilen des Farbstoffes der Formel (3a), 10 Teilen Natriumchlorid, 15 Teilen Natriumcarbonat und 1 Teil eines Benetzungsmittels wird in 1000 Teilen Wasser gelöst. In dieses Färbebad gibt man 100 g eines Baumwollgewebes. Die weitere Bearbeitung erfolgt wie in Beispiel 1 angegeben. Man erhält eine farbstarke braune Färbung mit sehr guten Echtheitseigenschaften.

### Beispiele 4 bis 20

Das Färbeverfahren nach Beispiel 1 wird wiederholt, wobei anstelle des Farbstoffes der Formel (1a) ein Farbstoff der allgemeinen Formel (1) eingesetzt wird, wobei die Bedeutung der Reste D₁, R₁ und R₂ ist in der nachfolgenden Tabelle angegeben ist. Man erhält in allen Fällen farbstarke braune Färbungen mit einem sehr guten Echtheitsniveau.

| Beispiel | D₁ | R₁ | R₂ |
|---|---|---|---|
| 4 | 6,8-Disulfo-naphth-2-yl | Methyl | Wasserstoff |
| 5 | dito | Amino | Chlor |
| 6 | dito | dito | Wasserstoff |
| 7 | 4,8-Disulfo-naphth-2-yl | Methyl | dito |
| 8 | dito | Amino | dito |
| 9 | dito | Methyl | Chlor |
| 10 | dito | Amino | dito |
| 11 | 3,6,8-Trisulfo-naphth-2-yl | dito | Chlor |
| 12 | dito | dito | Wasserstoff |
| 13 | 2,5-Disulfo-phenyl | Amino | dito |
| 14 | dito | dito | Chlor |
| 15 | dito | Methyl | dito |
| 16 | dito | dito | Wasserstoff |
| 17 | 2,4-Disulfo-phenyl | Amino | dito |
| 18 | dito | dito | Chlor |
| 19 | dito | Methyl | dito |
| 20 | dito | dito | Wasserstoff |

### Beispiele 21 bis 29

Das Färbeverfahren nach Beispiel 1 wird wiederholt, wobei anstelle des Farbstoffes der Formel (2a) ein Farbstoff der allgemeinen Formel (2b) eingesetzt wird.

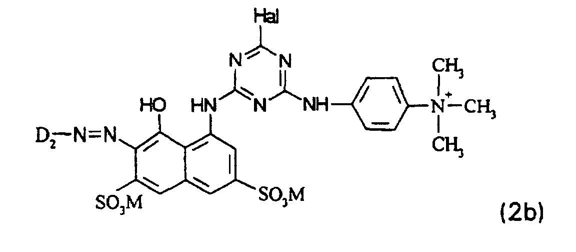

Die Bedeutung der Reste D₂ und Hal ist in der nachfolgenden Tabelle angegeben. Man erhält in allen Fällen farbstarke braune Färbungen mit einem sehr guten Echtheitsniveau.

| Beispiel | D₂ | Hal |
|---|---|---|
| 21 | 3-(β-Sulfatoethylsulfonyl)-phenyl- | Fluor |
| 22 | dito | Chlor |
| 23 | 4-( β-Sulfatoethylsulfonyl)-phenyl- | dito |
| 24 | 2-Methoxy-5-(β-sulfatoethylsulfonyl)-phenyl | dito |
| 25 | dito | Fluor |
| 26 | 2-Methoxy-5-methyl-4-( β-Sulfatoethylsulfonyl)-phenyl- | dito |
| 27 | dito | Chlor |
| 28 | 2,5-Dimethoxy-4-( β-Sulfatoethylsulfonyl)-phenyl- | dito |
| 29 | dito | Fluor |

### Beispiele 30 bis 39

Das Färbeverfahren nach Beispiel 1 wird wiederholt, wobei anstelle des Farbstoffes der Formel (2a) ein Farbstoff der allgemeinen Formel (2c) eingesetzt wird.

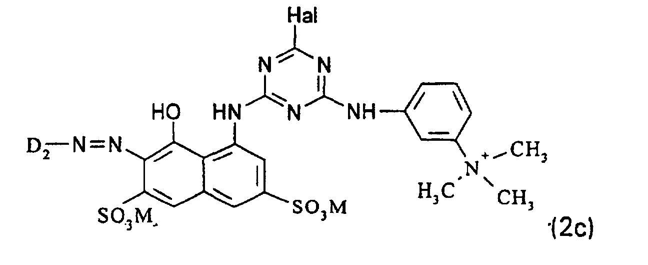

Die Bedeutung der Reste D₂ und Hal ist in der nachfolgenden Tabelle angegeben. Man erhält in allen Fällen farbstarke braune Färbungen mit einem sehr guten Echtheitsniveau.

| Beispiel | D₂ | Hal |
|---|---|---|
| 30 | 3-(β-Sulfatoethylsulfonyl)-phenyl- | Fluor |
| 31 | dito | Chlor |
| 32 | 4-( β-Sulfatoethylsulfonyl)-phenyl- | dito |
| 33 | dito | Fluor |
| 34 | 2-Methoxy-5-(β-sulfatoethylsulfonyl)-phenyl | dito |
| 35 | dito | Fluor |
| 36 | 2-Methoxy-5-methyl-4-( ß-Sulfatoethylsulfonyl)-phenyl- | dito |
| 37 | dito | Chlor |
| 38 | 2,5-Dimethoxy-4-( β-Sulfatoethylsulfonyl)-phenyl- | dito |
| 39 | dito | Fluor |

### Beispiele 40 bis 57

Das Färbeverfahren nach Beispiel 1 wird wiederholt, wobei anstelle des Farbstoffes der Formel (3a) ein Farbstoff der allgemeinen Formel (3b) eingesetzt wird.

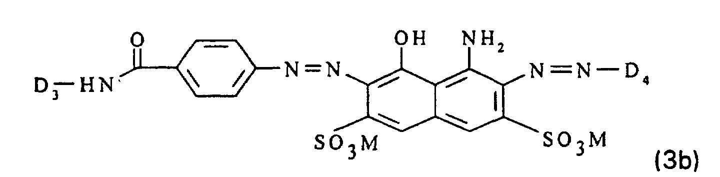

Die Bedeutung der Reste D₃ und D₄ ist in der nachfolgenden Tabelle angegeben. Man erhält in allen Fällen farbstarke braune Färbungen mit einem sehr guten Echtheitsniveau.

| Beispiel | D ₃ | D ₄ |
|---|---|---|
| 40 | 4-(β-Sulfatoethylsulfonyl)-phenyl- | 3-(β-Sulfatoethylsulfonyl)-phenyl- |
| 41 | dito | 2-Methoxy-5-(β-sulfatoethylsulfonyl)-phenyl |
| 42 | dito | 2-Methoxy-5-methyl-4-( β-Sulfatoethylsulfonyl)-phenyl- |
| 43 | dito | 2,5-Dimethoxy-4-( β-sulfatoethylsulfonyl)-phenyl- |
| 44 | 3-(β-Sulfatoethylsulfonyl)-phenyl- | 4-(β-Sulfatoethylsulfonyl)-phenyl- |
| 45 | dito | 3-(β-Sulfatoethylsulfonyl)-phenyl- |
| 46 | dito | 2-Methoxy-5-(β-sulfatoethylsulfonyl)-phenyl- |
| 47 | dito | 2-Methoxy-5-methyl-4-( β-sulfatoethylsulfonyl)-phenyl- |
| 48 | dito | 2,5-Dimethoxy-4-(β-sulfatoethylsulfonyl)-phenyl- |
| 49 | 2-Methoxy-5-(β-sulfatoethylsulfonyl)-phenyl | 4-(β-Sulfatoethylsulfonyl)-phenyl- |
| 50 | dito | 3-(β-Sulfatoethylsulfonyl)-phenyl- |
| 51 | dito | 2-Methoxy-5-(β-sulfatoethylsulfonyl)-phenyl- |
| 52 | 2-Methoxy-5-methyl-4-( β-sulfatoethylsulfonyl)-phenyl- | 3-(β-Sulfatoethylsulfonyl)-phenyl- |
| 53 | dito | 4-(β-Sulfatoethylsulfonyl)-phenyl- |
| 54 | dito | 2-Methoxy-5-(β-sulfatoethylsulfonyl)-phenyl- |
| 55 | 2,5-Dimethoxy-4-(β-sulfatoethylsulfonyl)-phenyl- | dito |
| 56 | dito | 3-(β-Sulfatoethylsulfonyl)-phenyl- |
| 57 | dito | 4-(β-Sulfatoethylsulfonyl)-phenyl- |

### Beispiele 58 bis 76

Das Färbeverfahren nach Beispiel 1 wird wiederholt, wobei anstelle des Farbstoffes der Formel (3a) ein Farbstoff der allgemeinen Formel (3c) eingesetzt wird.

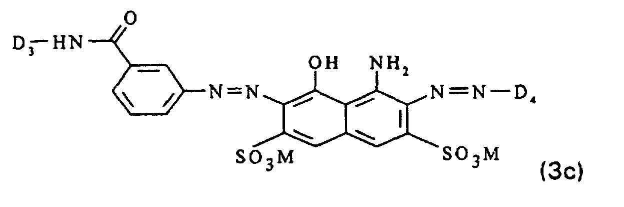

Die Bedeutung der Reste D₃ und D₄ ist in der nachfolgenden Tabelle angegeben. Man erhält in allen Fällen farbstarke braune Färbungen mit einem sehr guten Echtheitsniveau.

| Beispiel | D ₃ | D ₄ |
|---|---|---|
| 58 | 4-(β-Sulfatoethylsulfonyl)-phenyl- | 4-(β-Sulfatoethylsulfonyl)-phenyl- |
| 59 | dito | 3-(β-Sulfatoethylsulfonyl)-phenyl- |
| 60 | dito | 2-Methoxy-5-(β-sulfatoethylsulfonyl)-phenyl |
| 61 | dito | 2-Methoxy-5-methyl-4-( β-Sulfatoethylsulfonyl)-phenyl- |
| 62 | dito | 2,5-Dimethoxy-4-( β-sulfatoethylsulfonyl)-phenyl- |
| 63 | 3-(β-Sulfatoethylsulfonyl)-phenyl- | 4-(β-Sulfatoethylsulfonyl)-phenyl- |
| 64 | dito | 3-(β-Sulfatoethylsulfonyl)-phenyl- |
| 65 | dito | 2-Methoxy-5-(β-sulfatoethylsulfonyl)-phenyl- |
| 66 | dito | 2-Methoxy-5-methyl-4-( β-sulfatoethylsulfonyl)-phenyl- |
| 67 | dito | 2,5-Dimethoxy-4-( β-sulfatoethylsulfonyl)-phenyl- |
| 68 | 2-Methoxy-5-(β-sulfatoethylsulfonyl)-phenyl | 4-(β-Sulfatoethylsulfonyl)-phenyl- |
| 69 | dito | 3-(β-Sulfatoethylsulfonyl)-phenyl- |
| 70 | dito | 2-Methoxy-5-( β-sulfatoethylsulfonyl)-phenyl- |
| 71 | 2-Methoxy-5-methyl-4-( β-sulfatoethylsulfonyl)-phenyl- | 3-(β-Sulfatoethylsulfonyl)-phenyl- |
| 72 | dito | 4-(β-Sulfatoethylsulfonyl)-phenyl- |
| 73 | dito | 2-Methoxy-5-(β-sulfatoethylsulfonyl)-phenyl- |
| 74 | 2,5-Dimethoxy-4-( β-sulfatoethylsulfonyl)-phenyl- | dito |
| 75 | dito | 3-(β-Sulfatoethylsulfonyl)-phenyl- |
| 76 | dito | 4-(β-Sulfatoethylsulfonyl)-phenyl- |

### Beispiel 77

Eine Mischung aus 2 Teilen des Farbstoffes der Formel (1a), 1 Teil des Farbstoffes der Formel (2a), 8 Teilen des Farbstoffes der Formel (3a), 10 Teilen Natriumchlorid, 15 Teilen Natriumcarbonat und 1 Teil eines Benetzungsmittels wird in 1000 Teilen Wasser gelöst. In dieses Färbebad gibt man 100 g eines Baumwollgewebes. Die weitere Bearbeitung erfolgt wie in Beispiel 1 angegeben. Man erhält eine farbstarke schwarze Färbung mit sehr guten Echtheitseigenschaften.

### Beispiel 78

Eine Mischung aus 2,2 Teilen des Farbstoffes der Formel (1a), 1,5 Teilen des Farbstoffes der Formel (2a), 10 Teilen des Farbstoffes der Formel (3), 10 Teilen Natriumchlorid, 15 Teilen Natriumcarbonat und 1 Teil eines Benetzungsmittels wird in 1000 Teilen Wasser gelöst. In dieses Färbebad gibt man 100 g eines Baumwollgewebes. Die weitere Bearbeitung erfolgt wie in Beispiel 1 angegeben. Man erhält eine farbstarke schwarze Färbung mit sehr guten Echtheitseigenschaften.

### Beispiel 79

Eine Mischung aus 3,0 Teilen des Farbstoffes der Formel (1a), 2,0 Teilen des Farbstoffes der Formel (2a), 10 Teilen des Farbstoffes der Formel (3a), 10 Teilen Natriumchlorid, 15 Teilen Natriumcarbonat und 1 Teil eines Benetzungsmittels wird in 1000 Teilen Wasser gelöst. In dieses Färbebad gibt man 100 g eines Baumwollgewebes. Die weitere Bearbeitung erfolgt wie in Beispiel 1 angegeben. Man erhält eine farbstarke schwarze Färbung mit sehr guten Echtheitseigenschaften.

### Beispiel 80

Eine Mischung aus 2,4 Teilen des Farbstoffes der Formel (1a), 0,4 Teilen des Farbstoffes der Formel (2a), 5,2 Teilen des Farbstoffes der Formel (3a), 10 Teilen Natriumchlorid, 15 Teilen Natriumcarbonat und 1 Teil eines Benetzungsmittels wird in 1000 Teilen Wasser gelöst. In dieses Färbebad gibt man 100 g eines Baumwollgewebes. Die weitere Bearbeitung erfolgt wie in Beispiel 1 angegeben. Man erhält eine farbstarke grüne Färbung mit sehr guten Echtheitseigenschaften.

### Beispiel 81

Eine Mischung aus den folgenden Komponenten
1 Teil des Farbstoffes der Formel (1a),
1 Teil des Farbstoffes der Formel (2a),
8 Teile Natriumcarbonat und
1 Teil eines handelsüblichen Benetzungsmittels
wird in 1000 Teilen Wasser gelöst. In dieses Färbebad gibt man 100 g eines Baumwollgewebes. Die weitere Bearbeitung erfolgt wie in Beispiel 1 angegeben. Man erhält eine farbstarke orange Färbung mit sehr guten Echtheitseigenschaften.

### Beispiel 82

Eine Mischung aus den folgenden Komponenten
1 Teil des Farbstoffes der Formel (1a),
1 Teil des Farbstoffes der Formel (3a),
8 Teile Natriumcarbonat und
1 Teil eines handelsüblichen Benetzungsmittels
wird in 1000 Teilen Wasser gelöst. In dieses Färbebad gibt man 100 g eines Baumwollgewebes. Die weitere Bearbeitung erfolgt wie in Beispiel 1 angegeben. Man erhält eine farbstarke grüne Färbung mit sehr guten Echtheitseigenschaften.

### Beispiel 83

Eine Mischung aus den folgenden Komponenten
1 Teil des Farbstoffes der Formel (2a),
1 Teil des Farbstoffes der Formel (3a),
8 Teile Natriumcarbonat und
1 Teil eines handelsüblichen Benetzungsmittels
wird in 1000 Teilen Wasser gelöst. In dieses Färbebad gibt man 100 g eines Baumwollgewebes. Die weitere Bearbeitung erfolgt wie in Beispiel 1 angegeben. Man erhält eine farbstarke violette Färbung mit sehr guten Echtheitseigenschaften.

### Beispiel 84

Eine Mischung aus den folgenden Komponenten
1 Teil des Farbstoffes der Formel (1a),
1 Teil des Farbstoffes der Formel (2a),
5 Teile Natriumchlorid,
10 Teile Natriumcarbonat und
1 Teil eines handelsüblichen Benetzungsmittels
wird in 1000 Teilen Wasser gelöst. In dieses Färbebad gibt man 100 g eines Baumwollgewebes. Die weitere Bearbeitung erfolgt wie in Beispiel 1 angegeben. Man erhält eine farbstarke orange Färbung mit sehr guten Echtheitseigenschaften.

## Patentansprüche

1. Mischung von Reaktivfarbstoffen, die mindestens zwei Farbstoffe aus der Reihe der allgemeinen Formeln (1), (2) und (3) 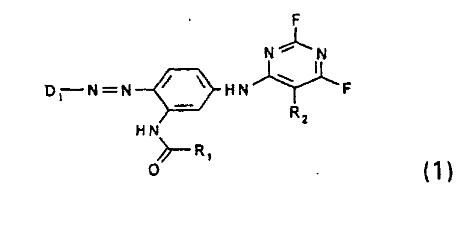 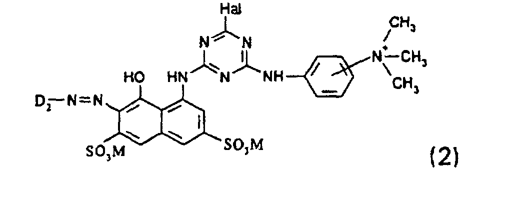 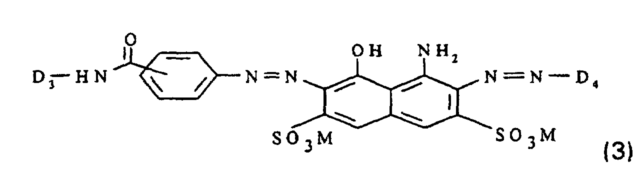 enthält, worin
D₁ für einen Benzol- oder Naphthalinring steht, der ein oder mehrere Sulfonsäuregruppen enthält;
R₁ Methyl oder Amino bedeutet;
R₂ Wasserstoff oder Chlor bedeutet;
Hal Fluor oder Chlor bedeutet;
M für Wasserstoff oder ein Alkalimetall steht;
D₂ bis D₄ die Bedeutung einer Gruppe der allgemeinen Formel (D) 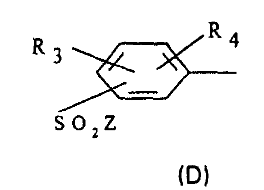 haben, in welcher
R₃ und R₄ unabhängig voneinander Wasserstoff, Methyl, Ethyl, Methoxy, Ethoxy, Sulfo oder Carboxy bedeuten und
Z für -CH=CH₂ oder -CH₂CH₂Z₁, worin Z₁ eine unter Alkaliwirkung abspaltbare Gruppe bedeutet, steht.

2. Mischung gemäß Anspruch 1, **dadurch gekennzeichnet, daß** sie jeweils einen oder mehrere der Farbstoffe der allgemeinen Formeln (1) und (2), (1) und (3) oder (2) und (3) enthält, wobei der oder die Farbstoffe der genannten allgemeinen Formeln jeweils, bezogen auf die Gesamtfarbstoffmenge in Mengen von 10 bis 90 Gew%, besonders bevorzugt 30 bis 70 Gew.%, enthalten sind.

3. Mischung gemäß Anspruch 1, dadurch gekenzeichnet, daß sie jeweils einen oder mehrere der Farbstoffen der allgemeinen Formeln (1), (2) und (3) enthält, wobei Farbstoffe der allgemeinen Formel (1) in Mengen von 5 bis 90 Gew.%, Farbstoffe der allgemeinen Formel (2) in Mengen von 5 bis 80 Gew.% und Farbstoffe der allgemeinen Formel (3) in Mengen von 5 bis 90 Gew.%, jeweils bezogen auf die Gesamtfarbstoffmenge, enthalten sind.

4. Mischung gemäß Anspruch 1 und/oder 3, dadurch gekenzeichnet, daß sie jeweils einen oder mehrere der Farbstoffen der allgemeinen Formeln (1), (2) und (3) enthält, wobei Farbstoffe der allgemeinen Formel (1) in Mengen von 5 bis 50 Gew.%, Farbstoffe der allgemeinen Formel (2) in Mengen von 5 bis 50 Gew.% und Farbstoffe der allgemeinen Formel (3) in Mengen von 45 bis 90 Gew.%, jeweils bezogen auf die Gesamtfarbstoffmenge, enthalten sind.

5. Mischung gemäß Anspruch 1 und /oder 3, dadurch gekenzeichnet, daß sie jeweils einen oder mehrere der Farbstoffen der allgemeinen Formeln (1), (2) und (3) enthält, wobei Farbstoffe der allgemeinen Formel (1) in Mengen von 30 bis 80 Gew.%, Farbstoffe der allgemeinen Formel (2) in Mengen von 5 bis 50 Gew.% und Farbstoffe der allgemeinen Formel (3) in Mengen von 10 bis 50 Gew.%, jeweils bezogen auf die Gesamtfarbstoffmenge, enthalten sind.

6. Mischung gemäß einem oder mehreren der Ansprüche 1 bis 5, **dadurch gekennzeichnet, daß** ein für D₁ stehender Benzol- oder Naphthalinring 2 Sulfonsäuregruppen enthält.

7. Mischung gemäß einem oder mehreren der Ansprüche 1 bis 6, **dadurch gekennzeichnet, daß** R₃ und R₄ Wasserstoff und Z Vinyl oder β-Sulfatoethyl bedeuten.

8. Verfahren zur Herstellung der Mischung von Reaktivfarbstoffen gemäß einem oder mehrerer der Ansprüche 1 bis 7, **dadurch gekennzeichnet, daß** die Einzelfarbstoffe in den gewünschten Gewichtsanteilen mechanisches vermischt werden.

9. Verfahren zum Färben oder Bedrucken von hydroxy- und/oder carbonamidgruppenhaltigen Materialien, **dadurch gekennzeichnet, daß** man eine Mischung von Reaktivfarbstoffen gemäß einem oder mehreren der Ansprüche 1 bis 7 als Farbmittel verwendet.

10. Verfahren gemäß Anspruch 9, **dadurch gekennzeichnet, daß** man bei einem Einsatz bis zu 2 Gew.% der Mischung von Reaktivfarbstoffen, bezogen auf das zu färbende oder bedruckende Material, kein Elektrolytsalz, bei einem Einsatz von 2 bis 4 Gew.% 1 bis 5g/l Färbebad Elektrolytsalz und bei einem Einsatz von 4 bis 10 Gew.% 5 bis 10g/l Färbebad Elektrolytsalz verwendet.

## Claims

1. A mixture of reactive dyes which comprises at least two dyes selected from the group consisting of the general formulae (1), (2) and (3) 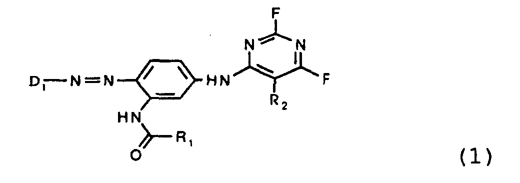 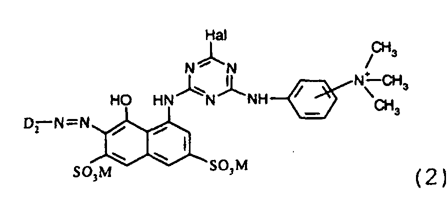 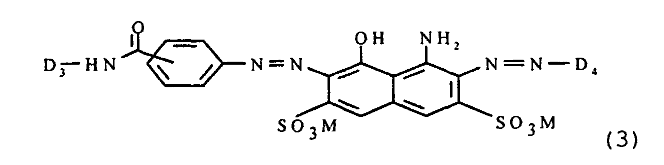 where
D₁ is a benzene or naphthalene ring containing one or more sulfonic acid groups;
R₁ is methyl or amino;
R₂ is hydrogen or chlorine;
Hal is fluorine or chlorine;
M is hydrogen or an alkali metal;
D₂ to D₄ are each a group of the general formula (D) 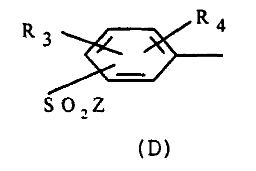
where
R₃ and R₄ are independently hydrogen, methyl, ethyl, methoxy, ethoxy, sulfo or carboxyl, and
Z is -CH=CH₂ or -CH₂CH₂Z₁, where Z₁ is an alkali-detachable group.

2. A mixture as claimed in claim 1, comprising one or more of each of the dyes of the general formulae (1) and (2), (1) and (3) or (2) and (3), the dye or dyes of the general formulae mentioned each being present in amounts of 10 to 90% by weight, particularly preferably 30 to 70% by weight, based on the total amount of dye.

3. A mixture as claimed in claim 1, comprising one or more of each of the dyes of the general formulae (1), (2) and (3), the dyes of the general formula (1) being present in amounts of 5 to 90% by weight, dyes of the general formula (2) in amounts of 5 to 80% by weight and dyes of the general formula (3) in amounts of 5 to 90% by weight, in each case based on the total amount of dye.

4. A mixture as claimed in claim 1 and/or 3, comprising one or more of each of the dyes of the general formulae (1), (2) and (3), the dyes of the general formula (1) being present in amounts of 5 to 50% by weight, dyes of the general formula (2) in amounts of 5 to 50% by weight and dyes of the general formula (3) in amounts of 45 to 90% by weight, in each case based on the total amount of dye.

5. A mixture as claimed in claim 1 and/or 3, comprising one or more of each of the dyes of the general formulae (1), (2) and (3), the dyes of the general formula (1) being present in amounts of 30 to 80% by weight, dyes of the general formula (2) in amounts of 5 to 50% by weight and dyes of the general formula (3) in amounts of 10 to 50% by weight, in each case based on the total amount of dye.

6. A mixture as claimed in one or more of claims 1 to 5, wherein a benzene or naphthalene ring D₁ contains 2 sulfonic acid groups.

7. A mixture as claimed in one or more of claims 1 to 6, wherein R₃ and R₄ are each hydrogen and Z is vinyl or β-sulfatoethyl.

8. A process for preparing the mixture of reactive dyes of one or more of claims 1 to 7, which comprises mechanically mixing the individual dyes in the desired weight fractions.

9. A process for dyeing or printing hydroxyl- and/or carboxamido-containing materials, which comprises using a mixture of reactive dyes as claimed in one or more of claims 1 to 7 as colorant.

10. The process of claim 9, wherein up to 2% by weight of the mixture of reactive dyes, based on the material to be dyed or printed, is used without electrolyte salt, 2 to 4% by weight is used with 1 to 5 g of electrolyte salt/l of dyebath and 4 to 10% by weight is used with 5 to 10 g of electrolyte salt/l of dyebath.

## Revendications

1. Mélange de colorants réactifs, qui contient au moins deux colorants de la série de ceux de formules générales (1), (2) et (3) 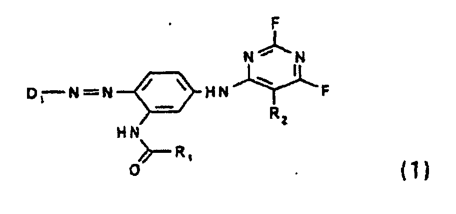 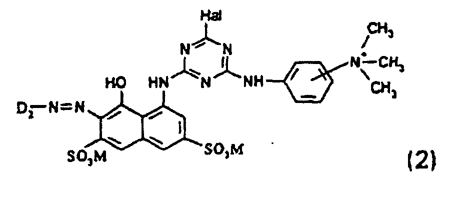 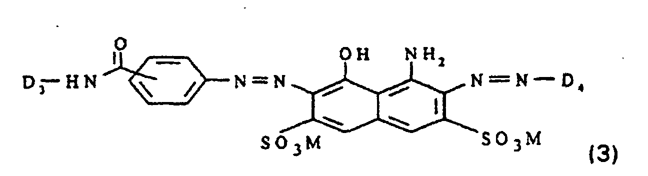 dans lesquelles
D₁ représente un cycle benzénique ou naphtalénique qui contient un ou plusieurs groupes sulfo ;
R₁ représente le groupe méthyle ou amino ;
R₂ représente un atome d'hydrogène ou de chlore ;
Hal représente le fluor ou le chlore ;
M représente un atome d'hydrogène ou un métal alcalin ;
D₂ à D₄ représentent un groupe de formule générale (D) 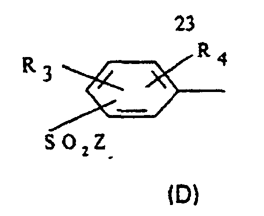 dans laquelle
R₃ et R₄ représentent, indépendamment l'un de l'autre, un atome d'hydrogène, le groupe méthyle, éthyle, méthoxy, éthoxy, sulfo ou carboxy et
Z représente un groupe -CH=CH₂ ou -CH₂CH₂Z₁, dans lequel Z₁ représente un groupe séparable sous l'effet d'un alcali.

2. Mélange selon la revendication 1, **caractérisé en ce qu'**il contient un ou plusieurs des colorants, respectivement, de formules générales (1) et (2), (1) et (3) ou (2) et (3), le ou les colorants des formules générales citées étant contenus chacun, par rapport à la quantité totale des colorants, en quantités de 10 à 90 % en poids, de façon particulièrement préférée de 30 à 70 % en poids.

3. Mélange selon la revendication 1, **caractérisé en ce qu'**il contient un ou plusieurs des colorants, respectivement, de formules générales (1), (2) et (3), les colorants de formule générale (1) étant contenus en quantités de 5 à 90 % en poids, les colorants de formule générale (2) étant contenus en quantités de 5 à 80 % en poids et les colorants de formule générale (3) étant contenus en quantités de 5 à 90 % en poids, dans chaque cas par rapport à la quantité totale des colorants.

4. Mélange selon la revendication 1 et/ou la revendication 3, **caractérisé en ce qu'**il contient un ou plusieurs des colorants, respectivement, de formules générales (1), (2) et (3), les colorants de formule générale (1) étant contenus en quantités de 5 à 50 % en poids, les colorants de formule générale (2) étant contenus en quantités de 5 à 50 % en poids et les colorants de formule générale (3) étant contenus en quantités de 45 à 90 % en poids, dans chaque cas par rapport à la quantité totale des colorants.

5. Mélange selon la revendication 1 et/ou la revendication 3, **caractérisé en ce qu'**il contient un ou plusieurs des colorants, respectivement, de formules générales (1), (2) et (3), les colorants de formule générale (1) étant contenus en quantités de 30 à 80 % en poids, les colorants de formule générale (2) étant contenus en quantités de 5 à 50 % en poids et les colorants de formule générale (3) étant contenus en quantités de 10 à 50 % en poids, dans chaque cas par rapport à la quantité totale des colorants.

6. Mélange selon une ou plusieurs des revendications 1 à 5, **caractérisé en ce qu'**un cycle benzénique ou naphtalénique représenté par D contient 2 groupes sulfo.

7. Mélange selon une ou plusieurs des revendications 1 à 6, **caractérisé en ce que** R₃ et R₄ représentent un atome d'hydrogène et Z représente le groupe vinyle ou β-sulfatoéthyle.

8. Procédé pour la préparation du mélange de colorants réactifs selon une ou plusieurs des revendications 1 à 7, **caractérisé en ce que** les colorants individuels sont mélangés mécaniquement en les proportions pondérales désirées.

9. Procédé pour la teinture ou l'impression de matériaux contenant des groupes hydroxy et/ou carbamoyle, **caractérisé en ce qu'**on utilise comme agent de teinture un mélange de colorants réactifs selon une ou plusieurs des revendications 1 à 7.

10. Procédé selon la revendication 9, **caractérisé en ce que** dans le cas d'une utilisation de jusqu'à 2 % en poids du mélange de colorants réactifs, par rapport au matériau à teindre ou à imprimer, on n'utilise aucun sel électrolytique, dans le cas d'une utilisation de 2 à 4 % en poids du mélange de colorants réactifs on utilise de 1 à 5 g de sel électrolytique par litre de bain de teinture et dans le cas d'une utilisation de 4 à 10 % en poids du mélange de colorants réactifs on utilise de 5 à 10 g de sel électrolytique par litre de bain de teinture.
